# EUROPÄISCHE PATENTSCHRIFT

(11) **EP 1 865 880 B1**
(45) Veröffentlichungstag und Bekanntmachung des Hinweises auf die Patenterteilung: **14.09.2011**
(21) Anmeldenummer: 06707135.7
(22) Anmeldetag: 21.02.2006
(51) Int. Cl.: A61C 13/00

(54) **VERFAHREN ZUR HERSTELLUNG VON METALLISCHEN DENTALRESTAURATIONSELEMENTEN**
METHOD FOR PRODUCING METALLIC DENTAL RESTORATION ELEMENTS
PROCEDE POUR PRODUIRE DES ELEMENTS DE RESTAURATION DENTAIRE METALLIQUES

(30) Priorität: 25.02.2005 DE 102005009210
(43) Veröffentlichungstag der Anmeldung: 19.12.2007
(73) Patentinhaber: Sokalla, Wolfgang, 52511 Geilenkirchen (DE)
(72) Erfinder: Sokalla, Wolfgang, 52511 Geilenkirchen (DE)
(74) Vertreter: Jostarndt, Hans-Dieter
(86) Internationale Anmeldenummer: PCT/EP2006/001567
(87) Internationale Veröffentlichungsnummer: WO 2006/089717

(56) Entgegenhaltungen:
- WO-A-02/19940
- WO-A-91/05654
- WO-A-03/053274
- WO-A1-91/05654
- DE-A1-102004 013 939
- US-A1- 2004 137 408
- US-A1- 2004 166 456
- US-A1- 2004 197 740

## Beschreibung

Die Erfindung betrifft ein Verfahren zur Herstellung von metallischen Dentalrestaurationselementen, die erhaltenen Dentalrestaurationselemente und ihre Verwendung.

Dentalrestaurationselemente im Sinne der vorliegenden Erfindung umfassen alle künstlich hergestellten Elemente, wie zum Beispiel Brücken, Inlays, Onlays, Veneers, Verblend-, Vollund Teleskopkronen, die zur Restauration eines Sollzustands der Zahnung dienen.

Metallische Dentalrestaurationselemente werden meist traditionell durch eine Gusstechnik hergestellt.

Bei der Gusstechnik dient ein Abdruck der Zahnsituation im Mund des patienten dem Zahntechniker als negatives Abbild der Zahnsituation, dazu aus Wachs modellierte passende positive Abbilder einer Sollform der Zahnsituation, um diese zur Herstellung einer Form zu verwenden, die wiederum als negatives Abbild der Sollform in Form einer Gussform zur Fertigung der endgültigen metallischen Dentalrestaurationselemente benutzt wird. Diese Technik ist daher sehr zeit- und kostenintensiv. Zudem ist die Qualität der Wachsmodelle ungünstigerweise extrem vom Geschick des jeweiligen Zahntechnikers abhängig. Das führt wiederum ungünstigerweise dazu, dass die endgültigen Dentalrestaurationselemente kleine Unterschiede zur idealen Sollform aufweisen können, die zu Ungenauigkeiten führen und manchmal durch mehrere Anpassungsschritte korrigiert werden müssen. Gegebenenfalls müssen die Wachsmodelle der Sollform, die als Ausgangspunkt für die Dentalrestaurationselemente dienen, in einer langwierigen Prozedur sogar komplett neu erstellt werden.

Die Zahnsituation umfasst den Zustand der Zahnung im Mund des Patienten. Dabei geht es nicht nur um den Zustand des zu restaurierenden Teils der Zahnung, der zum Beispiel aus Zahnstümpfen oder aus Zahnlücken bestehen kann, sondern auch um benachbarte oder am gegenüberliegenden Kiefer vorhandene Zähne. Gegebenenfalls kann es sogar erforderlich sein, den Zustand des gesamten Ober- und Unterkiefers als Zahnsituation zu erfassen.

Die Sollform umfasst die ideale Form eines Dentalrestaurationselementes, welches ein ästhetisches und funktionelles, den Wünschen des Patienten entsprechendes Bild der Zahnung herstellt. Dieses vom Patienten gewünschte Bild der Zahnung entspricht dem Sollzustand der Zahnung.

Parallel zur reinen Gusstechnik hat sich der Einsatz von Verblendkronen bewährt, um den stetig steigenden ästhetischen Anforderungen, die an Produkte zur Dentalrestauration heutzutage gestellt werden, genügen zu können. Diese Kronen werden, wie bereits erwähnt, an die bestehende Zahnsituation des Patienten angepasst und dank der Gusstechnik hergestellt. Sie sind jedoch speziell dazu gedacht, mit einer Keramik- oder Kunststoffschicht oder durch Keramik- oder Kunststoffkappen an die Zahnfarbe des Patienten angepasst zu werden.

Diese Verblendungen werden konventionell von einem Zahntechniker manuell direkt aus einem Keramikblock, oder aus einem Keramikmaterial, oder Kunststoff oder individuell geschichtet anhand eines vorher erstellten Modells der Sollform kopiergefräst.

Darüber hinaus sind CAD/CAM-Systeme zur rechnergestützten Restauration von Zähnen zum Beispiel aus der deutschen Patentschrift DE 195 18 702 A1 bekannt. Bei diesen Systemen erfolgt zunächst die Erfassung der Geometrie der Zahnsituation. Anschließend dienen die erfassten Daten in einem CAD-Verfahren zur Erstellung einer Sollform, die dann schließlich in einem CAM-Verfahren hergestellt wird. Dabei erfolgt hier die Erfassung der Geometrie der Zahnsituation mit einem 3D-Messgerät am Behandlungsplatz. Die CAM/CAD-Aufgaben werden auf einen nicht am Behandlungsplatz befindlichen Rechner ausgelagert, wobei die Mustererkennung, die Bildverarbeitung, die CAD-Konstruktion und die Erstellung der CNC-Programme durch den Zentralrechner teilweise automatisch erfolgen. Die Herstellung erfolgt mithilfe einer numerisch gesteuerten Schleifeinheit aus einem Block eines geeigneten Zahnrestaurationsmaterials.

Ein CAD/CAM-System ermöglicht es, die im Mund des Patienten vorliegende Zahnsituation oder den vom Zahnarzt angefertigten Abdruck bequem digital, durch einen jeweils passenden Scanner, zu erfassen.

Scanner sind aus den deutschen Patentschriften DE 195 24 855 A1 und DE 196 40 495 C2 bekannt. In DE 195 24 855 A1 erzeugt eine tragbare 3D-Messkamera ein monochromes 3D-Bild eines Objektes (Zahns) und bringt es mit Farb-Videobildern vom gleichen Objekt in Beziehung. In DE 196 40 495 C2 wird eine Sonde im Mundraum verwendet. Diese Sonde weist eine Lichtquelle, einen Detektor und einen Prozessor auf, der die Signale digitalisiert und zu einer dreidimensionalen Darstellung weiterverarbeitet.

Aus der Fachliteratur (QZ, Quintessenz Zahntechnik, Januar 2005, Seite 61 und 62) ist bekannt, dass mit den erfassten Daten ein virtuelles 3D Model der Zahnsituation des Patienten dank einer Computersoftware erzeugt wird. Des Weiteren kann anhand des virtuellen 3D Modells der Zahnsituation des Patienten eine virtuelle Sollform der Dentalrestaurationselemente dank verschiedener Softwarewerkzeuge bequem und schnell am Computer erstellt werden. Die vom Zahntechniker oder vom Zahnarzt erstellte virtuelle Sollform wird dann an eine Fräsoder Schleifeinheit übertragen, die genau diese virtuelle Sollform aus einem Keramik- oder Zirkonoxidblock und/oder Zirkon fräst oder schleift.

Außerdem sind Verfahren zur Herstellung von metallischen Dentalrestaurationselementen ebenfalls anhand eines virtuellen Abbildes der eingescannten Zahnsituation des Patienten und einer anschließend am Computer erstellten Sollform der Dentalrestaurationselemente bekannt. Anstatt der bereits erwähnten Fräs- oder Schleifwerkzeuge weist die numerisch gesteuerte Herstellungseinheit in diesem Fall einen Laser auf, der die metallischen Dentalrestaurationselemente herstellt oder "ausdruckt". Dabei wird feines Metallpulver aus Titan, Gold oder einer Kobalt-Chrom Legierung auf einer Platte verteilt. Ein scharf gebündelter Laserstrahl schmilzt es nach den exakten Vorgaben der am Computer erstellten Sollform und verhärtet es zu einer 100 Mikrometer dünnen Schicht. Anschließend wird wieder Pulver auf der Platte verteilt, und der Laser fertigt die nächste Schicht. Rund 100-mal läuft dieser Prozess automatisiert ab, dann liegt das fertige metallische Dentalrestaurationselement auf der Platte.

Dokumente US 2004/197740 sowie US 2004/137408 offenbaren je ein Verfahren zur Herstellung von metallischen Dentalrestaurationselementen, wobei anhand der Daten der zuvor erstellten Sollform der Zahnsituation auf der Grundlage der berechneten zur Fertigung nötigen Werkzeugbewegungen ein Kontrollprogramm erzeugt wird, welches eine numerisch gesteuerte Herstellungseinheit veranlasst, ein positives Abbild der Sollform der Zahnsituation aus einem ausbrennbaren und nicht aufquellenden Material herzustellen: In US 2004/197740 weist die numerisch gesteuerte Herstellungseinheit eine Stereolithographieanlage auf. In US 2004/137408 wird ein Rapid-Prototyping-Verfahren verwendet.

Aufgabe der Erfindung ist es, ein Verfahren bereitzustellen, das eine bequeme, Zeit sparende und passgenaue Herstellung von metallischen Dentalrestaurationselementen dank der traditionellen Gusstechnik ermöglicht.

Erfindungsgemäß wird diese Aufgabe durch ein Verfahren mit den Merkmalen des unabhängigen Anspruchs 1 gelöst. Vorteilhafte Weiterbildungen des Verfahrens ergeben sich aus den Unteransprüchen 2-26.

Bei dem erfindungsgemäßen Verfahren wird zunächst in einem ersten Schritt die Geometrie der Zahnsituation erfasst. In einem zweiten Schritt werden die erfassten Daten von einem Prozessor und einer Computersoftware oder von einem Anwender interpretiert (Mustererkennung) und in ein virtuelles dreidimensionales Bild der Zahnsituation umgewandelt (Bildverarbeitung). Dieses virtuelle dreidimensionale Bild kann dann, in einem dritten Schritt, weiter von einem Anwender am Computer, anhand von verschiedenen Softwarewerkzeugen oder von einer Computersoftware automatisch oder weitgehend automatisch, anhand der in einer Datenbank gespeicherten Daten (wie zum Beispiel einer Zahn- oder Restaurationsbibliothek) zur Erstellung einer Sollform der Zahnsituation bearbeitet werden.

Die beim CAD/CAM-System die jeweilige Zahnsituation digital erfassenden Scanner enthalten gegebenenfalls eine Quelle elektromagnetischer Strahlung, mindestens einen Detektor, der Strahlungssignale aufnimmt und mindestens einen Prozessor, der die detektierten Signale digitalisiert. Darüber hinaus können die Scanner jedoch zusätzlich oder alternativ über eine Vorrichtung zur mechanischen Abtastung der zu scannenden Formen verfügen.

In einem vierten Schritt wird die Sollform in ein Programm für eine numerisch gesteuerte Herstellungseinheit übersetzt. In einem fünften Schritt wird dann schließlich das Dentalrestaurationselement, durch ein Kontrollprogramm gesteuert, in der Herstellungseinheit gefertigt. Die letzten beiden Schritte sind als Computer Aided Manufacturing bekannt. Das CAD/CAM-System umfasst dabei einen Computer zur Eingabe, zur Bearbeitung und zur Übersetzung in ein Kontrollprogramm für die Herstellungseinheit der auf die Zahnsituation bezogenen Daten und eine numerisch gesteuerte Herstellungseinheit, wie zum Beispiel eine Fräs- oder Schleifeinheit, die mit diesem Computer in irgendeiner Art verbunden ist und die eingegebenen und bearbeiteten Daten durch mindestens ein Herstellungswerkzeug, wie zum Beispiel ein Fräs- oder Schleifwerkzeug, anhand eines vom Computer vorgegebenen Kontrollprogramms umsetzt. Die Fräs- oder Schleifwerkzeuge sind bevorzugterweise Diamantenschleifer. Im erfindungsgemäßen Verfahren kann die Steuerung der Herstellungseinheit durch das Kontrollprogramm direkt durch einen Computer erfolgen oder durch einen in die Herstellungseinheit integrierten CNC-Prozessor. Im zweiten Fall spricht man von einem CNC-Verfahren (Computarized Numerically Controlled). Auch ein in die Herstellungseinheit integrierter Computer kann natürlich zum Einsatz kommen. Ausgangspunkt des Kontrollprogramms für die computerunterstützte Fertigung von Zahnersatz ist die zuvor per CAD erstellte Sollform des Dentalrestaurationselements. Zum CAM gehört dann, dass zunächst die Festlegung aller technologischen Parameter, die für die Bearbeitung auf den entsprechenden numerisch gesteuerten Fräs- oder Schleifeinheiten notwendig sind, erfolgt. Hierzu zählen u. a. die Bearbeitungs-Strategie, Arbeitsbereiche, Werkzeuge, Vorschübe, Zustellungen etc. Anschließend werden dann die zur Fertigung nötigen Werkzeugbewegungen von einer Software berechnet und das fertige Kontrollprogramm in einem, von der jeweiligen Herstellungseinheit benötigten, Format erzeugt. Die Grundlage für das Kontrollprogramm sind die berechneten Werkzeugbewegungen. Die Übersetzung des Kontrollprogramms in ein CNC-Programm wird ebenfalls von einer Software durchgeführt, falls die Steuerung der Herstellungseinheit über einen integrierten CNC-Prozessor erfolgen soll. Hierbei werden die Werkzeugbewegungen aus dem Kontrollprogramm in das benötigte Format des jeweiligen CNC-Prozessors der numerisch gesteuerten Herstellungseinheit übertragen. Mit zunehmender Anzahl der Bewegungsachsen und zunehmenden Freiheitsgraden steigen die Anforderungen an die Software und die entsprechenden CNC-Programme werden sehr komplex. Diese zunehmende Komplexität ist vor allem auf die Kollisionsprüfung zurückzuführen. Hierunter versteht man, dass bei der Umsetzung der Werkzeugbewegungen eine Konturverletzung des hergestellten Gegenstandes durch das Werkzeug vermieden werden muss.

Das CNC-Programm ist eine speziell an den jeweiligen CNC-Prozessor der Herstellungseinheit angepasste Fassung des Kontrollprogramms.

Darüber hinaus erfolgt die Erfassung der Geometrie der Zahnsituation im erfindungsgemäßen Verfahren über einen Scanner, der entweder in die Herstellungseinheit integriert ist oder von dieser Einheit unabhängig ist. In einer bevorzugten Ausführungsform des erfindungsgemäßen Verfahrens ist der Scanner tragbar ausgestaltet und ermöglicht die Erfassung der Zahnsituation direkt im Mund des Patienten. Die Erfassung der Geometrie der Zahnsituation über einen von der Herstellungseinheit unabhängigen Scanner ermöglicht es, gleichzeitig zu fertigen und zu scannen. Zudem ist ein tragbarer Scanner, der die Erfassung der Zahnsituation direkt im Mund des Patienten ermöglicht, komfortabel und Zeit sparend, da kein Abdruck der Zahnsituation mehr angefertigt werden muss.

Im erfindungsgemäßen Verfahren zur Herstellungvon metallischen Dentalrestaurationselementen wird anhand der Daten der zuvor erstellten Sollform der Zahnsituation, auf der Grundlage der berechneten zur Fertigung nötigen Werkzeugbewegungen, ein Kontrollprogramm erzeugt, welches eine numerisch gesteuerte Herstellungseinheit veranlasst, ein positives Abbild der Sollform der Zahnsituation aus einem ausbrennbaren und nicht aufquellenden Material herzustellen, wobei die numerisch gesteuerte Herstellungseinheit mindestens ein Herstellungswerkzeug umfasst.

Ausbrennbar im Sinne der Erfindung bedeutet, dass das Material bei einer Temperatur zwischen 500°C und 1100°C, insbesondere zwischen 650°C und 950°C und besonders bevorzugt zwischen 750°C und 850°C möglichst rückstandslos entfernt werden kann. Das Material kann dabei verdampfen, in sich zusammenfallen, sich verflüssigen oder auf eine andere Art entfernt werden.

Im erfindungsgemäßen Verfahren wird also nach den bereits erwähnten Schritten wie bei der traditionellen Gusstechnik ein positives Abbild einer Sollform der Zahnsituation hergestellt, wobei dieses positive Abbild zur Herstellung einer Gipsform (oder einer Form aus einer Einbettmasse) verwendet wird, die wiederum als negatives Abbild der Sollform der Zahnsituation in Form einer Gussform zur Fertigung der endgültigen metallischen Dentalrestaurationselemente dient.

Das erfindungsgemäß verwendete Material zur Herstellung des positiven Abbildes der Zahnsituation ist vorzugsweise ein Polymermaterial, das genauso wie das traditionell verwendete Wachs bei der Herstellung der Gussform einfach und möglichst rückstandslos ausgebrannt wird. Durch die Hitzeeinwirkung schmilzt dabei das Polymermaterial. Damit die Gussform beim Ausbrennen nicht beschädigt wird, sollte das Material zudem so wenig wie möglich aufquellen. Des Weiteren sollte das Herstellungswerkzeug durch das Material nicht beschädigt oder durch Verschmieren unbrauchbar gemacht werden. Außerdem muss ein annehmbares Schwingverhalten des Materials beim Bearbeiten sichergestellt werden. Ferner sollte die Handhabung des Materials möglichst einfach sein. Bei der Verarbeitung sollte möglichst keine Gesundheitsgefährdung entstehen. Ansonsten sollte das Material auch eine möglichst passgenaue Herstellung ermöglichen. Das verwendete Material sollte die nötige Festigkeit, Formstabilität und Oberflächenbeschaffenheit aufweisen. Darüber hinaus sollte das Material durch herkömmlichen in der Dentaltechnik verwendeten Verfahren und Materialien weiterverarbeitet werden können. Bevorzugterweise enthält das Polymermaterial verschiedene Additive, die jeweils maximal 10 Gew.-% des Polymermaterials ausmachen. In einer weiteren bevorzugten Ausführungsform des erfindungsgemäßen Verfahrens ist das Polymermaterial ein Polymergemisch. Zudem umfasst das Polymermaterial bevorzugterweise mindestens 50 Gew.-%, insbesondere zwischen 60 Gew.-% und 90 Gew.-%, besonders bevorzugt zwischen 70 Gew.-% und 80 Gew.-% und in einem weiteren bevorzugten Ausführungsbeispiel zwischen 90 Gew.-% und 100 Gew.-%, eines Polyacrylates, insbesondere eine Polymethacrylates, besonders bevorzugt Polymethylmethacrylat.

Das Polymermaterial kann aus einem festen Polymer, einem verflüssigten Polymer, einem festen Polymergemisch oder einem verflüssigten Polymergemisch, gegebenenfalls mit Additiven versetz, hergestellt werden. Ebenso kann ein gasförmiger Monomer, ein flüssiger Monomer, ein verflüssigter fester Monomer oder ein Gemisch von gasförmigen, flüssigen und/oder verflüssigten Monomeren, gegebenenfalls mit Additiven versetzt, zur Herstellung des Polymermaterials verwendet werden. Auch eine Kombination von zwei oder mehreren der erwähnten Stoffe kann zur Herstellung des Polymermaterials eingesetzt werden.

Die Additive können z.B. als Lösungsmittel, zur Regulierung der Fließeigenschaften, zum Einbringen einer Farbe, zur Steigerung der Festigkeit, zur Verringerung des Schrumpfens und/oder des Aufquellens, zur Verbesserung des Ausbrennverhaltens, zur Anpassung der Härte an die Herstellungswerkzeuge, zur Bildung eines Polymers aus einem Monomer und/oder Monomergemisch, zur Vernetzung von Polymeren und zur Bildung eines Polymernetzwerkes aus einem Monomer oder Monomergemisch und einem Polymer oder Polymergemisch dienen. Verschiedene Additive können auch miteinander kombiniert werden, um das Polymermaterial mit den gewünschten Eigenschaften auszustatten. Besonders bevorzugt sind Additive, die zur Bildung eines Polymernetzwerkes dienen. Diese Additive werden auch Härter genannt (crosslinking or curing agent) sorgen dank ihrer chemischen Funktionalität für die Vernetzung der einzelnen Polymere. Diese Vernetzung kann vollständig oder nur anteilig sein.

Darüber hinaus kann, wenn die Herstellungseinheit eine Fräsoder Schleifeinheit umfasst, durch das erfindungsgemäße Verfahren auch die Auslastung von bestehenden Fräs- oder Schleifeinheiten optimiert werden, da sie nicht mehr nur zur Herstellung von fertigen Dentalrestaurationselementen aus einem keramischen Material oder aus Zirkonoxid eingesetzt werden können. Die Präzision des Fräs- oder Schleifvorgangs liegt dabei im Mikrometer-Bereich. Ein derart präziser Vorgang sorgt dafür, dass die endgültige Form der metallischen Dentalrestaurationselemente genau der virtuell am Computer erstellten Sollform entspricht.

Ferner sind die durch das erfindungsgemäße Verfahren hergestellten Dentalrestaurationselemente demzufolge extrem passgenau und dabei nicht spröde. Daher können sie sehr einfach gehandhabt und transportiert werden.

Anhand des virtuell erstellten dreidimensionalen Bildes der Zahnsituation und der verschiedenen Softwarewerkzeuge, die zur Bearbeitung des Bildes verwendet werden können, ist die Sollform der Dentalrestaurationselemente bequemer und zeitsparender herzustellen als durch eine Modellierung aus Wachs, da eine Korrektur am Computer einfach und jederzeit möglich ist. Des Weiteren bietet der Zugriff auf eine Datenbank (zum Beispiel eine Zahn- oder Restaurationsbibliothek) die Möglichkeit, die Sollform eines metallischen Dentalrestaurationselements Zeit und Kosten sparend automatisch oder weitgehend automatisch von einer Software erstellen zu lassen. Durch die Datenbanken können jederzeit gleich bleibende Ergebnisse sichergestellt werden. Wenn gewünscht, kann die Sollform anschließend mit herkömmlichen Materialien (z.B. Wachs) weiter individualisiert werden.

Alternativ oder zusätzlich zu einem Fräs- oder Schleifwerkzeug kann die Herstellungseinheit auch ein Mittel zur Erzeugung elektromagnetischer Strahlung aufweisen, das dazu dient, einem flüssigen Monomer, gegebenenfalls mit einem strahlungsabsorbierenden Stoff vermischt, gezielt an gewissen Stellen, die zur Polymerisation nötige Energie zuzuführen, und auf diese Art das Polymermaterial aus einem Behälter mit einem flüssigen Monomer, Schicht für Schicht entstehen zu lassen und anschließend, gegebenenfalls durch Fräsen und Schleifen, nachzubearbeiten.

Weitere Vorteile, Besonderheiten und zweckmäßige Weiterbildungen der Erfindung ergeben sich aus den Unteransprüchen und den nachfolgendem Ausführungsbeispiel.

### Beispiel:

In diesem Beispiel wird ein erfindungsgemäßes Verfahren zur Herstellung von Kronen und Brücken, Teleskopkronen, Teilkronen, Inlays und Onlays (als Vollguss oder auch zur Verblendung) aus Metall, mit der Gusstechnik in Verbindung mit CAD/CAM-Systemen und ausbrennbaren Polymermaterialien beschrieben.

Verschiedenartige Kronen und Brücken aus Metall werden in herkömmlichen dentaltechnischen Verfahren aus Wachsen oder Kunststoffen modelliert und durch Gusstechniken hergestellt. Durch den Einsatz von CAD/CAM Systemen jedoch werden Kronen nicht mehr modelliert, sondern am Computer konstruiert und in Fräseinheiten aus Metall oder vollkeramischen Materialien aus den jeweiligen Blöcken herausgefräst. Dabei sind kleinere Fräseinheiten wie z.B. das Cerec Inlab nicht für das Fräsen aus Metallen ausgelegt. Darüber hinaus sind die Kosten für das Fräsen in externen Fräszentren, die große Fräseinheiten besitzen, hoch und es entstehen Wartezeiten von ein paar Tagen für die Lieferung des Dentalrestaurationselementes. Die kleineren Fräseinheiten, z. B. das Cerec InLab werden überwiegend für die Vollkeramik eingesetzt. In diesem Beispiel wird erklärt, wie man eine solche kleinere Fräseinheit zur Herstellung einer Sollform der Zahnsituation aus einem ausbrennbaren Polymermaterial verwenden kann.

### 1) Herstellung des Polymermaterialblocks

Zunächst wird ein in eine Fräseinheit als Rohling einbringbarer Polymermaterialblock hergestellt. Dieser Polymermaterialblock muss dabei sehr gut mit der Maschinenhalterung verbunden sein. Die Maschinenhalterung ist jeweils an die Fräseinheit angepasst und hält den Rohling, während er vom Herstellungswerkzeug bearbeitet wird.

Viele Versuche haben gezeigt, dass beim erfindungsgemäßen Verfahren die Auswahl des ausbrennbaren Materials wichtig ist.

In diesem Beispiel wird ein besonders bevorzugtes Polymermaterial verwendet.

Folgende Aspekte sollten hauptsächlich beachtet werden:
- Die Oberfläche der Sollform sollte homogen sein;
- Schleifwerkzeuge dürfen sich nicht mit Polymermaterial zusetzen oder beschädigt werden;
- die Passgenauigkeit des Polymermaterials sollte sehr gut sein. Das Material sollte demnach ein möglichst geringes Schrumpfen aufweisen;
- das Ausbrennverhalten der Sollform in der Gussform sollte darauf überprüft werden, dass die Gussform nicht durch das Aufquellen des ausbrennbaren Polymermaterials beschädigt wird;
- das rückstandslose Verbrennen des Polymermaterials sollte möglich sein;
- die Weiterverarbeitung sollte, dank in der Dentaltechnik bewährter Verfahren, möglich sein;
- die Festigkeit des Polymermaterials für die Sollform sollte ausreichend sein;

Der Kunststoff PI-KU Plast HP der Firma Bredent ist ein Beispiel eines Polymermaterials, das diese Voraussetzungen ausreichend erfüllt. Dieses Polymermaterial ist demzufolge bevorzugterweise zur Herstellung der von der Fräseinheit bearbeitbaren Polymermaterialblöcke geeignet. Es besteht aus einem flüssigen Monomer mit verschiedenen Additiven und einem festen Polymer, die ein festes Polymernetzwerk bilden können.

Bei einer manuellen Herstellung der Polymermaterialblöcke in Kleinserie wird zunächst aus Modellierwachs ein Wachsblock geformt, der eine fräseinheitengerechte Form und Größe hat. An diesem Wachsblock wird gegebenenfalls die Maschinenhalterung befestigt. Das Ganze wird dann auf einen Dublierteller gesetzt und darüber wird ein Dublierring befestigt. Dieser wird dann mit einer geeigneten Dubliermasse ausgegossen. Die aus der Dubliermasse hergestellte Dublierform ist ein negatives Abbild des Wachsblocks, gegebenenfalls mit der Maschinenhalterung, und kann zum Gießen der entsprechenden Polymermaterialblöcke dienen.

Die Maschinenhalterung wird dazu in die Dublierform eingesetzt. Danach wird das Polymermaterial eingebracht. Als günstigste Einfülltechnik hat sich die Streutechnik erwiesen. Es wird dabei abwechselnd Monomer und Polymer in die Form eingestreut. Der feste Polymermaterialblock bildet sich dabei direkt um die Metalldrahtschlaufe auf der Maschinenhalterung.

Die Befestigung der Maschinenhalterung an den Polymermaterialblöcken mit Klebstoffen ist möglich, aber die mechanische Befestigung hat sich als haltbarer erwiesen. Es wurden mehrere Sekundenkleber, aber auch Industrieklebstoffe verwendet. Viele Versuche mit verschiedenen Klebstoffen waren unbefriedigend, sodass eine mechanische Befestigung an die Maschinenhalterung angebracht wurde. Diese mechanische Befestigung besteht z.B. aus einer Metalldrahtschlaufe, die mit der vorhandenen Maschinenhalterung, durch eine lokalisierte Verschmelzung der Metalle, dank eines Lasers verbunden wurde.

Ist die Dublierform nur ein negatives Abbild des Wachsblocks, ohne Maschinenhalterung, kann die Maschinenhalterung auch nachträglich entweder ohne Metalldrahtschlaufe auf das feste Polymermaterial geklebt werden oder mit Metalldrahtschlaufe in das noch flüssige Polymermaterial nach dem Einfüllen in die Dublierform zur Herstellung der entsprechenden Polymermaterialblöcke leicht eingetaucht werden. Der feste Polymermaterialblock bildet sich dabei direkt um die Metalldrahtschlaufe auf der Maschinenhalterung.

Es ist ebenfalls möglich die Metalldrahtschlaufe durch ein anderes metallisches Teil zu ersetzen, wie z. B. ein hakenoder pilzförmiges Teil, das die Anbindung der Maschinenhalterung an den Polymermaterialblock verbessert. Außerdem können solche metallischen Maschinenhalterungen mit einem entsprechenden in das Material hineinreichenden Teil, das die Anbindung des Materialblocks an die eigentliche Maschinenhalterung verbessert, in einem Stück aus Metall gegossen, geschliffen, gefräst oder auf eine andere Art hergestellt werden.

Es besteht auch die Möglichkeit, sowohl den Block als auch die Maschinenhalterung in einem Stück aus einem geeigneten Polymermaterial zu gießen, zu schleifen, zu fräsen oder auf eine andere Art herzustellen.

Durch die veränderten Anforderungen, die eine Großserienfertigung an die Herstellungsprozesse stellt, kann das soeben beschriebene Herstellungsverfahren der Polymermaterialblöcke, anhand des Fachwissens, z. B. durch Extrusions-, Guss-, Spritzguss- oder Formpressverfahren, an diese Anforderungen angepasst werden. Besonders bevorzugt ist dabei das Extrusionsverfahren, das durch die Extrusion eines Polymers oder eines Polymergemisches, gegebenenfalls mit Additiven versetzt, eine kontinuierliche Herstellung von geeigneten Polymermaterialblöcken in fräseinheitengerechter Form und Größe ermöglicht.

Eine weitere bevorzugte Ausführungsform des Herstellungsverfahrens der Polymermaterialblöcke ist ein diskontinuierliches Verfahren, bei dem die Polymermaterialblöcke aus einem flüssigen Polymer, gegebenenfalls direkt auf den Maschinenhalterungen, in Formen gegossen werden.

### 2) Herstellung des Dentalrestaurationselementes

Die Zahnsituation im Mund des Patienten wird eingescannt und ein virtuelles 3D Modell am PC erstellt. Aus einer Zahndatenbank wird die Zahnform ausgesucht und virtuell eine Krone dargestellt und überarbeitet. Anschließend wird sie zum Schleifvorgang aus dem Polymermaterialblock freigegeben.

Die so entstandene Polymermaterialsollform kann mit der herkömmlichen Gusstechnik weiterverarbeitet werden. Dafür wird zunächst die Polymermaterialsollform angestiftet, das heißt, ein Gusskanal wird angebracht.

Danach wird die Polymermaterialsollform in einer Form befestigt. Diese Form wird dann mit einer handelsüblichen Einbettmasse aufgefüllt.

Die so entstandene Gussform wird anschließend in einem Ofen vorgewärmt und danach in einer handelsüblichen Schleuder mit dem Metall auf bekannte Weise gegossen. Nach dem Erkalten wird die Gussform ausgebettet. Der erhaltene Metallrohling kann der wie gewohnt ausgearbeitet werden kann.

Mit diesem Verfahren können Metallkronen mit einem CAD / CAM System virtuell modelliert und in gewohnter Gusstechnik weiterverarbeitet werden. Alle bei dieser Technik gängigen Materialien und Metalle können verarbeitet werden.

### Bild 1

zeigt drei durch eine Metallschlaufe modifizierte Maschinenhalterungen. Die Metallschlaufe reicht später in den hergestellten Polymermaterialblock hinein und verbessert so seine Anbindung an die eigentliche Maschinenhalterung.

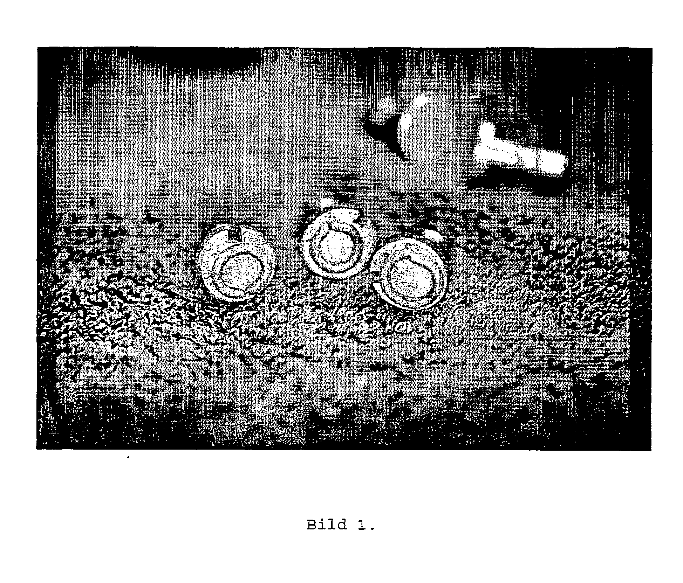

## Patentansprüche

1. Verfahren zur Herstellung von metallischen Dentalrestaurationselementen,
**dadurch gekenntzeichnet,**
dass anhand der Daten der zuvor erstellten Sollform der Zahnsituation, auf der Grundlage der berechneten zur Fertigung nötigen Werkzeugbewegungen ein Kontrollprogramm erzeugt wird, welches eine numerisch gesteuerte Herstellungseinheit veranlasst, ein positives Abbild der Sollform der Zahnsituation aus einem ausbrennbaren und nicht aufquellenden Polymermaterial, welches mindestens 50 Gew.-% eines Polyacrylats oder Polymethacrylats umfasst, herzustellen, wobei die numerisch gesteuerte Herstellungseinheit mindestens ein Fräs- oder Schleifwerkzeug umfasst, welches zur Herstellung des positiven Abbilds der Sollform der Zahnsituation verwendet wird.

2. Verfahren zur Herstellung von metallischen Dentalrestaurationselementen nach Anspruch 1
**dadurch gekennzeichnet,**
**dass** die Herstellungseinheit direkt vom Computer gesteuert wird.

3. Verfahren zur Herstellung von metallischen Dentalrestaurationselementen nach einem oder mehreren der vorangegangenen Ansprüche,
**dadurch gekennzeichnet,**
**dass** das Kontrollprogramm in ein CNC-Programm übersetzt wird.

4. Verfahren zur Herstellung von metallischen Dentalrestaurationselementen nach einem oder mehreren der vorangegangenen Ansprüche,
**dadurch gekennzeichet,**
dass die Herstellungseinheit von einem integrierten CNC-Prozessor gesteuert wird.

5. verfahren zur Herstellungvon metallischen Dentalrestaurationselementen nach einem oder mehreren der vorangegangenen Ansprüche,
**dadurch gekennzeichnet,**
**dass** die Erfassung der Zahnsituation des Patienten dank eines Scanners erfolgt.

6. Verfahren zur Herstellung von metallischen Dentalrestaurationselementen nach einem oder mehreren der vorangegangenen Ansprüche,
**dadurch gekenntzeichnet,**
dass der Scanner in die Herstellungseinheit integriert ist.

7. Verfahren zur Herstellung von metallischen Dentalrestaurationselementen nach einem oder mehreren der vorangegangenen Ansprüche,
**dadurch gekennzeichnet,**
**dass** der Scanner von der Herstellungseinheit unabhängig ist.

8. Verfahren zur Herstellung von metallischen Dentalrestaurationselementen nach einem oder mehreren der vorangegangenen Ansprüche,
**dadurch gekennzeichnet,**
**dass** der Scanner tragbar ausgestaltet ist und die Erfassung der Zahnsituation direkt im Mund des Patienten ermöglicht.

9. Verfahren zur Herstellung von metallischen Dentalrestaurationselementen nach einem oder mehreren der vorangegangenen Ansprüche,
**dadurch gekennzeichet,**
dass ein virtuelles dreidimensionales Bild der Zahnsituation anhand der erfassten Daten erstellt wird.

10. Verfahren zur Herstellung von metallischen Dentalrestaurationselementen nach einem oder mehreren der vorangegangenen Ansprüche,
**dadurch gekenntzeichnet,**
dass die Erstellung der Sollform der Zahnsituation von einem Anwender dank verschiedener Softwarewerkzeuge am Computer erfolgt.

11. Verfahren zur Herstellung von metallischen Dentalrestaurationselementen nach einem oder mehreren der vorangegangenen Ansprüche,
**dadurch gekennzeichnet,**
**dass** die Erstellung der Sollform der Zahnsituation durch eine Computersoftware automatisch oder weitgehend automatisch anhand der in einer Datenbank gespeicherten Daten erfolgt.

12. Verfahren zur Herstellung von metallischen Dentalrestaurationselementen nach einem oder mehreren der vorangegangenen Ansprüche,
**dadurch gekennzeichnet,**
**dass** ein negatives Abbild der Sollform der Zahnsituation in Form einer Gussform anhand eines positiven Abbildes der Sollform hergestellt wird.

13. Verfahren zur Herstellung von metallischen Dentalrestaurationselementen nach einem oder mehreren der vorangegangenen Ansprüche,
**dadurch gekenntzeichnet,**
dass die Gussform aus Einbettmassen besteht.

14. Verfahren zur Herstellung von metallischen Dentalrestaurationselementen nach einem oder mehreren der vorangegangenen Ansprüche,
**dadurch gekenntzeichnet,**
dass die Herstellung der metallischen Dentalrestaurationselemente dank der erhaltenen Gussform erfolgt.

15. Verfahren zur Herstellung von metallischen Dentalrestaurationselementen nach einem oder mehreren der
vorangegangenen Ansprüche,
**dadurch gekennzeichet,**
dass das Polymermaterial ein Polymer oder ein Polymergemisch umfasst.

16. Verfahren zur Herstellung von metallischen Dentalrestaurationselementen nach einem oder mehreren der vorangegangenen Ansprüche,
**dadurch gekennzeichnet,**
**dass** das Polymermaterial verschiedene Additive umfasst, wobei jedes Additiv maximal 10 Gew.-% des Polymermaterials ausmacht.

## Claims

1. A method for the production of metallic dental restoration elements,
**characterized in that**,
using the data obtained from the previously established desired shape of the dental situation, on the basis of the calculated instrument movements needed for the production process, a control program, that causes a numerically controlled production unit to create a positive impression of the desired shape of the dental situation employing a burnable and non-swelling polymer material containing at least 50% by weight of a polyacrylate or polymethacrylate, is generated, said numerically controlled production unit comprising at least one milling or grinding instrument that is used to make the positive impression of the desired shape of the dental situation.

2. The method for the production of metallic dental restoration elements according to Claim 1,
**characterized in that**
the production unit is controlled directly by the computer.

3. The method for the production of metallic dental restoration elements according to one or more of the preceding claims,
**characterized in that**
the control program is translated into a CNC program.

4. The method for the production of metallic dental restoration elements according to one or more of the preceding claims,
**characterized in that**
the production unit is controlled by an integrated CNC processor.

5. The method for the production of metallic dental restoration elements according to one or more of the preceding claims,
**characterized in that**
the dental situation of the patient is acquired using a scanner.

6. The method for the production of metallic dental restoration elements according to one or more of the preceding claims,
**characterized in that**
the scanner is integrated into the production unit.

7. The method for the production of metallic dental restoration elements according to one or more of the preceding claims,
**characterized in that**
the scanner is independent of the production unit.

8. The method for the production of metallic dental restoration elements according to one or more of the preceding claims,
**characterized in that**
the scanner is configured so as to be portable and to allow the dental situation of the patient to be acquired directly in the mouth of the patient.

9. The method for the production of metallic dental restoration elements according to one or more of the preceding claims,
**characterized in that**
a virtual three-dimensional image of the dental situation is generated on the basis of the acquired data.

10. The method for the production of metallic dental restoration elements according to one or more of the preceding claims,
**characterized in that**
the desired shape of the dental situation is created by a user using various software tools on the computer.

11. The method for the production of metallic dental restoration elements according to one or more of the preceding claims,
**characterized in that**
the desired shape of the dental situation is created by computer software either automatically or largely automatically on the basis of data stored in a database.

12. The method for the production of metallic dental restoration elements according to one or more of the preceding claims,
**characterized in that**
a negative impression of the desired shape of the dental situation is generated in the form of a casting mold based on a positive impression of the desired shape.

13. The method for the production of metallic dental restoration elements according to one or more of the preceding claims,
**characterized in that**
the casting mold is made of investment materials.

14. The method for the production of metallic dental restoration elements according to one or more of the preceding claims,
**characterized in that**
the metallic dental restoration elements are produced using the casting mold thus obtained.

15. The method for the production of metallic dental restoration elements according to one or more of the preceding claims,
**characterized in that**
the polymer material comprises a polymer or a polymer blend.

16. The method for the production of metallic dental restoration elements according to one or more of the preceding claims,
**characterized in that**
the polymer material comprises various additives, each additive amounting to a maximum of 10% by weight of the polymer material.

## Revendications

1. Procédé de fabrication d'éléments métalliques de restauration dentaire, **caractérisé en ce qu'**est créé, à l'aide des données de la forme désirée de la situation dentaire préalablement élaborée, sur la base des mouvements d'outil calculés et requis pour la fabrication, un programme de contrôle qui fait en sorte qu'une unité de fabrication à commande numérique produit une représentation positive de la forme désirée de la situation dentaire en utilisant un matériau polymère non gonflant, pouvant être éliminé thermiquement et qui comprend au moins 50 % en poids d'un polyacrylate ou d'un polyméthacrylate, l'unité de fabrication à commande numérique comprenant au moins un outil de fraisage ou de rectification qui est utilisé pour produire la représentation positive de la forme désirée de la situation dentaire.

2. Procédé de fabrication d'éléments métalliques de restauration dentaire selon la revendication 1, **caractérisé en ce que** l'unité de fabrication est commandée directement par l'ordinateur.

3. Procédé de fabrication d'éléments métalliques de restauration dentaire selon l'une ou plusieurs des revendications précédentes, **caractérisé en ce que** le programme de contrôle est traduit en un programme CNC.

4. Procédé de fabrication d'éléments métalliques de restauration dentaire selon l'une ou plusieurs des revendications précédentes, **caractérisé en ce que** l'unité de fabrication est commandée par un processeur CNC intégré.

5. Procédé de fabrication d'éléments métalliques de restauration dentaire selon l'une ou plusieurs des revendications précédentes, **caractérisé en ce que** le relevé de la situation dentaire du patient est effectué à l'aide d'un scanneur.

6. Procédé de fabrication d'éléments métalliques de restauration dentaire selon l'une ou plusieurs des revendications précédentes, **caractérisé en ce que** le scanneur est intégré à l'unité de fabrication.

7. Procédé de fabrication d'éléments métalliques de restauration dentaire selon l'une ou plusieurs des revendications précédentes, **caractérisé en ce que** le scanneur est indépendant de l'unité de fabrication.

8. Procédé de fabrication d'éléments métalliques de restauration dentaire selon l'une ou plusieurs des revendications précédentes, **caractérisé en ce que** le scanneur se présente sous une forme portable et permet de relever la situation dentaire directement dans la bouche du patient.

9. Procédé de fabrication d'éléments métalliques de restauration dentaire selon l'une ou plusieurs des revendications précédentes, **caractérisé en ce qu'**une image tridimensionnelle virtuelle de la situation dentaire est créée à l'aide des données qui ont été relevées.

10. Procédé de fabrication d'éléments métalliques de restauration dentaire selon l'une ou plusieurs des revendications précédentes, **caractérisé en ce que** l'élaboration de la forme désirée de la situation dentaire est effectuée à l'ordinateur par un utilisateur à l'aide de différents outils de logiciel.

11. Procédé de fabrication d'éléments métalliques de restauration dentaire selon l'une ou plusieurs des revendications précédentes, **caractérisé en ce que** l'élaboration de la forme désirée de la situation dentaire est effectuée de manière automatique ou largement automatique par un logiciel informatique à l'aide des données stockées dans une base de données.

12. Procédé de fabrication d'éléments métalliques de restauration dentaire selon l'une ou plusieurs des revendications précédentes, **caractérisé en ce qu'**une représentation négative de la forme désirée de la situation dentaire est réalisée sous la forme d'un moule à l'aide d'une représentation positive de la forme désirée.

13. Procédé de fabrication d'éléments métalliques de restauration dentaire selon l'une ou plusieurs des revendications précédentes, **caractérisé en ce que** le moule se compose de matériaux de revêtement.

14. Procédé de fabrication d'éléments métalliques de restauration dentaire selon l'une ou plusieurs des revendications précédentes, **caractérisé en ce que** la fabrication des éléments métalliques de restauration dentaire s'effectue à l'aide du moule obtenu.

15. Procédé de fabrication d'éléments métalliques de restauration dentaire selon l'une ou plusieurs des revendications précédentes, **caractérisé en ce que** le matériau polymère comprend un polymère ou un mélange de polymères.

16. Procédé de fabrication d'éléments métalliques de restauration dentaire selon l'une ou plusieurs des revendications précédentes, **caractérisé en ce que** le matériau polymère comprend différents additifs, chaque additif représentant au maximum 10 % en poids du matériau polymère.
